# EUROPEAN PATENT APPLICATION

(11) **EP 4 576 917 A1**
(43) Date of publication of application: **25.06.2025**
(21) Application number: 23842133.3
(22) Date of filing: 06.07.2023
(51) Int. Cl.: H04W 74/08

(54) **METHOD AND APPARATUS FOR WIRELESS COMMUNICATION**

(30) Priority: 18.07.2022 CN 202210843532
(71) Applicant: SHANGHAI LANGBO COMMUNICATION TECHNOLOGY COMPANY LIMITED, Shanghai 200240 (CN)
(72) Inventor: JIANG, Qi, Shanghai 201206 (CN); ZHANG, Xiaobo, Shanghai 201206 (CN)
(74) Representative: Gunzelmann, Rainer
(86) International application number: PCT/CN2023/106062
(87) International publication number: WO 2024/017068

(57) **Abstract**

Disclosed in the present application are a method and apparatus for wireless communication. The method comprises: a node first receiving a first information block, the first information block being used for determining a first timing advance value; starting or restarting a first timer in response to receiving the first information block; and then sending a target signal, wherein whether the first timing advance value is used for the sending timing of the target signal is related to a time domain resource occupied by the target signal; when the time domain resource occupied by the target signal belongs to a first time domain resource set, the first timing advance value is used for the sending timing of the target signal; and when the time domain resource occupied by the target signal does not belong to the first time domain resource set, the first timing advance value is not used for the sending timing of the target signal. The present application improves the timing advance determination mode in a sub-band full multiplexing scenario, thereby improving the overall performance and flexibility of a system.

## Description

### Technical Field

The present disclosure relates to a method and apparatus in a wireless communication system, and in particular, to a transmission scheme and apparatus for timing synchronization in a wireless communication system.

### Related Art

In conventional wireless communications, to ensure that uplink signals sent by all UEs served by a base station to the base station are aligned (Aligned) when arriving at the base station, the base station sends a TA (Timing Advance) adjustment indication to the UE by using a medium access control (Medium Access Control) layer signaling. Therefore, after determining a downlink timing according to a downlink signal from the base station, the UE can accurately determine an actual uplink sending timing with reference to the TA adjustment indication sent by the base station, thereby ensuring that uplink signals of all the UEs arriving at the base station are aligned without interference.

### SUMMARY

In an NR (New Radio) system, a subband full duplex (SBFD, Subband Full Duplex) is proposed. To be specific, one communication device simultaneously performs a sending operation and a receiving operation on two subbands. In a manner of implementing the subband full duplex, a base station uses two panels (Panel) to perform sending and receiving to implement the SBFD. The inventor finds, through research, that in an application scenario such as the SBFD, an existing uplink timing advance determining manner may no longer be applicable.

The present application discloses a solution to a problem of determining an uplink timing advance in the subband full duplex of NR. It should be noted that in the description of the present application, the subband full duplex is merely used as a typical application scenario or example. The present application is also applicable to other scenarios (for example, other scenarios that have a higher requirement on full duplex, including, but not limited to, a capacity enhancement system, a system using a higher frequency, a coverage enhancement system, unlicensed frequency domain communication, IoT (Internet of Things), a URLLC (Ultra Reliable Low Latency Communication) network, and Internet of Vehicles) that face a similar problem, and may also achieve a similar technical effect. In addition, a unified solution in different scenarios (including but not limited to the scenario of the subband full duplex) further helps to reduce hardware complexity and costs. Without conflicts, an embodiment in a first node device of the present application and features in this embodiment may be applied to a second node device, and vice versa. In particular, for explanations (if not especially described) of terminology (Terminology), nouns, functions, and variables in the present application, reference may be made to definitions in a TS36 series, a TS38 series, and a TS37 series of 3GPP specification protocols. If required, reference may be made to 3GPP standards TS38.211, TS38.212, TS38.213, TS38.214, TS38.215, TS38.321, TS38.331, TS38.305, and TS37.355 to assist in understanding the present application.

The present application discloses a method in a first node for wireless communication, including:
receiving a first information block, and starting or restarting a first timer in response to receiving the first information block, the first information block being used for determining a first timing advance value; and
sending a target signal.

Whether the first timing advance value is used for the sending timing of the target signal is related to a time domain resource occupied by the target signal. When the time domain resource occupied by the target signal belongs to a first time domain resource set, the first timing advance value is used for the sending timing of the target signal. When the time domain resource occupied by the target signal does not belong to the first time domain resource set, the first timing advance value is not used for the sending timing of the target signal.

As an embodiment, the foregoing method is characterized by improving accuracy of an uplink timing advance in a full duplex scenario.

As an embodiment, the foregoing method is characterized by improving adjustment flexibility of the uplink timing advance in the full duplex scenario, and reducing signaling overheads.

According to one aspect of the present application, the first information block is used for determining a second timing advance value. When the time domain resource occupied by the target signal belongs to a second time domain resource set, the second timing advance value is used for the sending timing of the target signal.

As an embodiment, the foregoing method is characterized by configuring different timing advance values for different time domain resources, to save signaling overheads and improve system flexibility.

According to one aspect of the present application, the first information block is only used for indicating a timing advance for one TAG (Timing Advance Group).

As an embodiment, the foregoing method is characterized by simplifying a configuration manner of the first information block.

As an embodiment, the foregoing method is characterized by reducing signaling overheads and improving backward compatibility.

According to one aspect of the present application, the first information block includes a first timing advance command and a second timing advance command. The first timing advance command and the second timing advance command are respectively used for indicating the first timing advance value and the second timing advance value. The first timing advance command and the second timing advance command are both associated with one TAG.

According to one aspect of the present application, the time domain resource occupied by the first time domain resource set and the time domain resource occupied by the second time domain resource set are orthogonal in a time domain.

According to one aspect of the present application, the method includes:
receiving a first signal and a second signal.

The first signal and the second signal are respectively associated with the first time domain resource set and the second time domain resource set. When the time domain resource occupied by the target signal belongs to the first time domain resource set, a resource occupied by the first signal is used for determining a space sending parameter of the target signal. When the time domain resource occupied by the target signal belongs to the second time domain resource set, a resource occupied by the second signal is used for determining the space sending parameter of the target signal.

According to one aspect of the present application, the first signal is used for determining a first receiving timing, and the second signal is used for determining a second receiving timing. When the time domain resource occupied by the target signal belongs to the first time domain resource set, the first receiving timing and the first timing advance value are jointly used for determining the sending timing of the target signal. When the time domain resource occupied by the target signal belongs to the second time domain resource set, the second receiving timing and the second timing advance value are jointly used for determining the sending timing of the target signal.

According to one aspect of the present application, the first signal and the second signal are associated with a same TCI codepoint (Codepoint).

The present application discloses a method in a second node for wireless communication, including:
sending a first information block, the first information block being used for determining a first timing advance value; and
receiving a target signal.

A receiver of the first information block includes a first node, and the first node starts or restarts a first timer in response to receiving the first information block. Whether the first timing advance value is used by the first node for the sending timing of the target signal is related to a time domain resource occupied by the target signal. When the time domain resource occupied by the target signal belongs to a first time domain resource set, the first timing advance value is used by the first node for the sending timing of the target signal. When the time domain resource occupied by the target signal does not belong to the first time domain resource set, the first timing advance value is not used by the first node for the sending timing of the target signal.

According to one aspect of the present application, the first information block is used for determining a second timing advance value. When the time domain resource occupied by the target signal belongs to a second time domain resource set, the second timing advance value is used for the sending timing of the target signal.

According to one aspect of the present application, the first information block is only used for indicating a timing advance for one TAG.

According to one aspect of the present application, the first information block includes a first timing advance command and a second timing advance command. The first timing advance command and the second timing advance command are respectively used for indicating the first timing advance value and the second timing advance value. The first timing advance command and the second timing advance command are both associated with one TAG.

According to one aspect of the present application, the time domain resource occupied by the first time domain resource set and the time domain resource occupied by the second time domain resource set are orthogonal in a time domain.

According to one aspect of the present application, the method includes:
sending a first signal and a second signal.

The first signal and the second signal are respectively associated with the first time domain resource set and the second time domain resource set. When the time domain resource occupied by the target signal belongs to the first time domain resource set, a resource occupied by the first signal is used for determining a space sending parameter of the target signal. When the time domain resource occupied by the target signal belongs to the second time domain resource set, a resource occupied by the second signal is used for determining the space sending parameter of the target signal.

According to one aspect of the present application, the first signal is used for determining a first receiving timing, and the second signal is used for determining a second receiving timing. When the time domain resource occupied by the target signal belongs to the first time domain resource set, the first receiving timing and the first timing advance value are jointly used for determining the sending timing of the target signal. When the time domain resource occupied by the target signal belongs to the second time domain resource set, the second receiving timing and the second timing advance value are jointly used for determining the sending timing of the target signal.

According to one aspect of the present application, the first signal and the second signal are associated with a same TCI codepoint.

The present application discloses a first node for wireless communication, including:
a first receiver, configured to receive a first information block, and start or restart a first timer in response to receiving the first information block, the first information block being used for determining a first timing advance value; and
a first transmitter, configured to send a target signal.

Whether the first timing advance value is used for the sending timing of the target signal is related to a time domain resource occupied by the target signal. When the time domain resource occupied by the target signal belongs to a first time domain resource set, the first timing advance value is used for the sending timing of the target signal. When the time domain resource occupied by the target signal does not belong to the first time domain resource set, the first timing advance value is not used for the sending timing of the target signal.

The present application discloses a second node for wireless communication, including:
a second transmitter, configured to send a first information block, the first information block being used for determining a first timing advance value; and
a second receiver, configured to receive a target signal.

A receiver of the first information block includes a first node, and the first node starts or restarts a first timer in response to receiving the first information block. Whether the first timing advance value is used by the first node for the sending timing of the target signal is related to a time domain resource occupied by the target signal. When the time domain resource occupied by the target signal belongs to a first time domain resource set, the first timing advance value is used by the first node for the sending timing of the target signal. When the time domain resource occupied by the target signal does not belong to the first time domain resource set, the first timing advance value is not used by the first node for the sending timing of the target signal.

As an embodiment, compared with existing methods, the foregoing method has the following advantages.
- A determining manner of an uplink timing is improved.
- The accuracy of an uplink timing advance is improved.
- The adjustment flexibility of the uplink timing advance in a full duplex scenario is improved, and signaling overheads are reduced.
- The spectrum efficiency is improved, and the transmission accuracy is improved.

### BRIEF DESCRIPTION OF THE DRAWINGS

Other features, objectives, and advantages of the present application will become clearer by reading detailed descriptions of non-restrictive embodiments with reference to the following accompanying drawings.
FIG. 1 shows a processing flowchart of a first node according to an embodiment of the present application;
FIG. 2 shows a schematic diagram of a network architecture according to an embodiment of the present application;
FIG. 3 shows a schematic diagram of an embodiment of a radio protocol architecture of a user plane and a control plane according to an embodiment of the present application;
FIG. 4 shows a schematic diagram of a first communication device and a second communication device according to an embodiment of the present application;
FIG. 5 shows a flowchart of transmission between a first node and a second node according to an embodiment of the present application;
FIG. 6 shows a flowchart of transmission of a first signal and a second signal according to an embodiment of the present application;
FIG. 7 shows a schematic diagram of a first information block according to an embodiment of the present application;
FIG. 8 shows a schematic diagram of a first time domain resource set and a second time domain resource set according to an embodiment of the present application;
FIG. 9 shows a schematic diagram of a first timing advance value according to an embodiment of the present application;
FIG. 10 shows a schematic diagram of a second timing advance value according to an embodiment of the present application;
FIG. 11 shows a schematic diagram of a first signal and a second signal according to an embodiment of the present application;
FIG. 12 shows a structural block diagram of a processing apparatus for use in a first node according to an embodiment of the present disclosure; and
FIG. 13 shows a structural block diagram of a processing apparatus for use in a second node according to an embodiment of the present disclosure.

### DETAILED DESCRIPTION

The following further describes the technical solutions of the present application in detail with reference to the accompanying drawings. It should be noted that the embodiments of the present application and features in the embodiments may be randomly combined with each other without conflicts.

### Embodiment 1

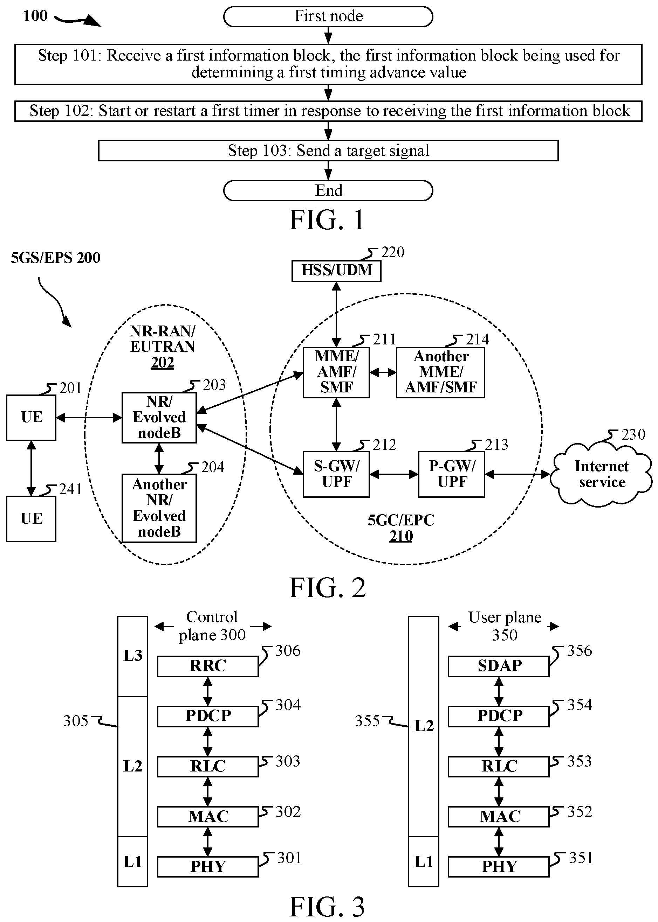

Embodiment 1 exemplarily shows a processing flowchart of a first node, as shown in FIG. 1. In 100 shown in FIG. 1, each box represents one step. In Embodiment 1, the first node in the present application receives a first information block in step 101. The first information block is used for determining a first timing advance value. In step 102, a first timer is started or restarted in response to receiving the first information block. In step 103, a target signal is sent.

In Embodiment 1, whether the first timing advance value is used for the sending timing of the target signal is related to a time domain resource occupied by the target signal. When the time domain resource occupied by the target signal belongs to a first time domain resource set, the first timing advance value is used for the sending timing of the target signal. When the time domain resource occupied by the target signal does not belong to the first time domain resource set, the first timing advance value is not used for the sending timing of the target signal.

As an embodiment, the first information block is transmitted by using a MAC (Medium Access Control) signaling.

As an embodiment, the first information block is transmitted by using a MAC CE (Control Element).

As an embodiment, the first information block includes a MAC (Medium Access Control) layer signaling.

As an embodiment, the first information block includes at least one MAC PDU (Protocol Data Unit).

As an embodiment, the first information block includes at least one MAC subPDU (subPDU).

As an embodiment, the first information block includes at least one MAC subheader (subheader).

As an embodiment, the first information block is transmitted by using a physical layer signaling.

As an embodiment, the first information block includes at least one MAC CE.

As an embodiment, the first information block includes a Timing Advance Command MAC CE.

As an embodiment, the first information block is used for indicating a first index value (Index Value). The first index value is used for determining the first timing advance value.

As a sub-embodiment of this embodiment, the first index value is a non-negative integer.

As an embodiment, the first timing advance value is in milliseconds.

As an embodiment, the first timing advance value is equal to a positive integer multiple of 16 · 64 *· T_{C}*/2*^{µ}*, where *µ* is related to a subcarrier spacing used by the target signal.

As a sub-embodiment of this embodiment, the first index value and 16 · 64 · *T_{C}*/2*^{µ}* in the present application are jointly used for determining the first timing advance value.

As a sub-embodiment of this embodiment, the first timing advance value is equal to a product of the first index value and 16 · 64 · *T_{C}*/2*^{µ}* in the present application.

As a sub-embodiment of this embodiment, the first timing advance value is linearly related to the product of the first index value and 16 · 64 · *T_{C}*/2*^{µ}* in the present application.

As a sub-embodiment of this embodiment, *T_{C}* = 1/(Δ*fₘₐₓ · N_{f}*), where Δ*fₘₐₓ* = 480000, and *N_{f}* = 4096.

As an embodiment, a physical layer channel occupied by the target signal includes a PUSCH (Physical Uplink Shared Channel).

As an embodiment, the physical layer channel occupied by the target signal includes a PUCCH (Physical Uplink Control Channel).

As an embodiment, the physical layer channel occupied by the target signal includes a PRACH (Physical Random Access Channel).

As an embodiment, the target signal includes an SRS (Sounding Reference Signal).

As an embodiment, a transmission channel corresponding to the target signal includes a UL-SCH (Uplink Shared Channel).

As an embodiment, when the first timing advance value is used for the sending timing of the target signal, the first timing advance value is used for determining an uplink sending timing of the first node in the first time domain resource set.

As an embodiment, when the first timing advance value is used for the sending timing of the target signal, the first timing advance value is used for determining a boundary of a radio frame occupied by the target signal.

As an embodiment, when the first timing advance value is used for the sending timing of the target signal, the first timing advance value is used for determining a start time of the radio frame occupied by the target signal.

As an embodiment, when the first timing advance value is used for the sending timing of the target signal, the first timing advance value is used for determining a boundary of a slot (Slot) occupied by the target signal.

As an embodiment, when the first timing advance value is used for the sending timing of the target signal, the first timing advance value is used for determining a start time of the slot occupied by the target signal.

As an embodiment, when the first timing advance value is used for the sending timing of the target signal, the first timing advance value is used for determining a boundary of a first OFDM symbol occupied by the target signal.

As an embodiment, when the first timing advance value is used for the sending timing of the target signal, the first timing advance value is used for determining a start time of the first OFDM symbol occupied by the target signal.

As an embodiment, when the first timing advance value is used for the sending timing of the target signal, a start time of an uplink frame (Frame Number) i for transmitting a target radio signal is earlier than a start time of a corresponding downlink frame having a downlink frame number i by *T_{TA}.* The first timing advance value is used for determining *T_{TA}.*

As a sub-embodiment of this embodiment, the first timing advance value is equal to *T_{TA}.*

As a sub-embodiment of this embodiment, a sum of the first timing advance value and an offset value is equal to *T_{TA}.*

As an auxiliary embodiment of this sub-embodiment, the offset value is equal to *N_{TA}* · *T_{C}.*

As a sub-embodiment of this embodiment, the first node determines the start time of the downlink frame having the downlink frame number i by using a downlink timing.

As a sub-embodiment of this embodiment, *T_{TA}* is in milliseconds.

As an embodiment, the first time domain resource set occupies a positive integer number of slots in a time domain.

As an embodiment, the first time domain resource set occupies a positive integer number (greater than 1) of multi-carrier symbols in the time domain.

As an embodiment, the multi-carrier symbol in the present application is an OFDM (Orthogonal Frequency Division Multiplexing) symbol.

As an embodiment, the multi-carrier symbol in the present application is an SC-FDMA (Single-Carrier Frequency Division Multiple Access) symbol.

As an embodiment, the multi-carrier symbol in the present application is an FBMC (Filter Bank Multi Carrier) symbol.

As an embodiment, the multi-carrier symbol in the present application is an OFDM symbol including a CP (Cyclic Prefix).

As an embodiment, the multi-carrier symbol in the present application is a DFT-s-OFDM (Discrete Fourier Transform Spreading Orthogonal Frequency Division Multiplexing) symbol including a CP.

As an embodiment, the first time domain resource set is configured by using an RRC (Radio Resource Control) signaling.

As an embodiment, the first time domain resource set is configured by using a MAC layer signaling.

As an embodiment, the first time domain resource set is indicated by using a MAC CE.

### Embodiment 2

Embodiment 2 exemplarily shows a schematic diagram of a network architecture, as shown in FIG. 2.

Embodiment 2 exemplarily shows a schematic diagram of a network architecture according to an embodiment of the present application, as shown in FIG. 2. FIG. 2 shows a V2X communication architecture under a 5G NR (NewRadio), LTE (Long-Term Evolution), and LTE-A (Long-Term Evolution Advanced) system architecture. The 5G NR or LTE network architecture may be referred to as a 5GS (5GSystem)/EPS (Evolved Packet System) in some other suitable terminology.

The V2X communication architecture in Embodiment 2 includes a UE (User Equipment) 201, a UE 241, an NG-RAN (next generation radio access network) 202, a 5GC (5G Core Network)/EPC (Evolved Packet Core) 210, an HSS (Home Subscriber Server)/UDM (Unified Data Management) 220, a ProSe function 250, and a ProSe application server 230. The V2X communication architecture may be interconnected to another access network, but for simplicity, these entities/interfaces are not shown. As shown in the figure, the V2X communication architecture provides a packet-switched service. However, a person skilled in the art will easily understand that various concepts presented throughout the present application may be extended to a network providing a circuit-switched service or another cellular network. The NG-RAN includes an NR nodeB (gNB) 203 and another gNB 204. The gNB 203 provides user and control plane protocol terminations towards the UE 201. The gNB 203 may be connected to the another gNB 204 via an Xn interface (for example, a backhaul). The gNB 203 may alternatively be referred to as a base station, a base transceiver station, a radio base station, a radio transceiver, a transceiver function, a basic service set (BSS), an extended service set (ESS), a TRP (transmitter receiver point), or some other suitable terminology. The gNB 203 provides an access point to the 5GC/EPC 210 for the UE 201. An example of the UE 201 includes a cellular phone, a smart phone, a session initiation protocol (SIP) phone, a laptop computer, a personal digital assistant (PDA), a satellite radio, non-ground base station communication, satellite mobile communication, a global positioning system, a multimedia apparatus, a video apparatus, a digital audio player (for example, an MP3 player), a camera, a game console, an unmanned aerial vehicle, an aircraft, a narrow band Internet of Things device, a machine type communication device, transportation means, an automobile, a wearable device, or any other similar functional apparatus. A person skilled in the art may alternatively refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminology. The gNB 203 is connected to the 5GC/EPC 210 by using an S1/NG interface. The 5GC/EPC 210 includes an MME (Mobility Management Entity/AMF (Authentication Management Field)/SMF (Session Management Function) 211, another MME/AMF/SMF 214, an S-GW (Service Gateway)/UPF (UserPlaneFunction) 212, and a P-GW (Packet Date Network Gateway)/UPF 213. The MME/AMF/SMF 211 is a control node that processes signaling between the UE 201 and the 5GC/EPC 210. Generally, the MME/AMF/SMF 211 provides bearer and connection management. All user IP (Internet Protocol) packets are delivered by using the S-GW/UPF 212. The S-GW/UPF 212 is connected to the P-GW/UPF 213. The P-GW provides UE IP address allocation and other functions. The P-GW/UPF 213 is connected to an Internet service 230. The Internet service 230 includes an Internet protocol service corresponding to an operator, and may specifically include the Internet, an Intranet, an IMS (IP Multimedia Subsystem), and a packet-switched streaming service. The ProSe function 250 is a logical function for network-related behaviors required by a proximity-based service (ProSe, Proximity-based Service), and includes a DPF (Direct Provisioning Function), a direct discovery name management function (Direct Discovery Name Management Function), and an EPC-level discovery ProSe function (EPC-level Discovery ProSe Function). The ProSe application server 230 has functions such as storing an EPC ProSe user identity, mapping between an application layer user identity and an EPC ProSe user identity, and allocating a code suffix pool of ProSe restriction.

As an embodiment, the UE 201 corresponds to the first node in the present application, and the gNB 203 corresponds to the second node in the present application.

As an embodiment, the UE 201 supports Massive-MIMO (Massive-Multiple Input Multiple Output).

As an embodiment, the UE 201 supports subband full duplex.

As an embodiment, the UE 201 supports simultaneously receiving a plurality of beamforming signals over one time-frequency resource.

As an embodiment, the UE 201 supports simultaneously sending a plurality of beamforming signals over one time-frequency resource.

As an embodiment, the UE 201 supports simultaneously receiving and sending a plurality of beamforming signals over one time-frequency resource.

As an embodiment, the UE 201 supports simultaneously receiving a plurality of beamforming signals over one frequency domain resource.

As an embodiment, the UE 201 supports simultaneously sending a plurality of beamforming signals over one time domain resource.

As an embodiment, the UE 201 supports simultaneously receiving and sending a plurality of beamforming signals over one frequency domain resource.

As an embodiment, the UE 201 supports being simultaneously scheduled by a plurality of serving cells.

As an embodiment, the UE 201 supports being simultaneously scheduled by a plurality of TRPs (transmitter receiver points).

As an embodiment, the NR nodeB corresponds to the second node in the present application.

As an embodiment, the NR nodeB supports Massive-MIMO.

As an embodiment, the NR nodeB supports subband full duplex.

As an embodiment, the NR nodeB supports simultaneously receiving a plurality of beamforming signals over one time-frequency resource.

As an embodiment, the NR nodeB supports simultaneously sending a plurality of beamforming signals over one time-frequency resource.

As an embodiment, the NR nodeB supports simultaneously receiving and sending a plurality of beamforming signals over one time-frequency resource.

As an embodiment, the NR nodeB supports simultaneously receiving a plurality of beamforming signals over one frequency domain resource.

As an embodiment, the NR nodeB supports simultaneously sending a plurality of beamforming signals over one frequency domain resource.

As an embodiment, the NR nodeB supports simultaneously receiving and sending a plurality of beamforming signals over one frequency domain resource.

As an embodiment, the NR nodeB supports being simultaneously scheduled by a plurality of serving cells.

As an embodiment, the NR nodeB supports being simultaneously scheduled by a plurality of TRPs (transmitter receiver points).

As an embodiment, the NR nodeB is a base station.

As an embodiment, the NR nodeB is a cell.

As an embodiment, the NR nodeB includes a plurality of cells.

As an embodiment, the NR nodeB is used for determining transmission on a plurality of serving cells.

As an embodiment, the first node in the present application corresponds to the UE 201, and the second node in the present application corresponds to the NR nodeB.

As an embodiment, the first node and the second node in the present application are the UE 201 and the gNB 203 respectively.

As an embodiment, the first node in the present application is the UE 201, and the second node in the present application is the UE 241.

### Embodiment 3

Embodiment 3 shows a schematic diagram of an embodiment of a radio protocol architecture of a user plane and a control plane according to the present application, as shown in FIG. 3. FIG. 3 is a schematic diagram of an embodiment of a radio protocol architecture for a user plane 350 and a control plane 300. FIG. 3 shows the radio protocol architecture for the control plane 300 between a first communication node device (UE, gNB, or RSU in V2X) and a second communication node device (gNB, UE, or RSU in V2X) by using three layers: layer 1, layer 2, and layer 3. Layer 1 (L1 layer) is the lowest layer and implements various PHY (physical layer) signal processing functions. The L1 layer is referred to as a PHY 301 in the present specification. Layer 2 (L2 layer) 305 is above the PHY 301, and is responsible for a link between the first communication node device and the second communication node device through the PHY 301. The L2 layer 305 includes a MAC (Medium Access Control) sublayer 302, an RLC (Radio Link Control) sublayer 303, and a PDCP (Packet Data Convergence Protocol) sublayer 304. These sublayers terminate at the second communication node device. The PDCP sublayer 304 provides multiplexing between different radio bearers and logical channels. The PDCP sublayer 304 further provides security by encrypting a data packet, and the PDCP sublayer 304 further provides handover support of the first communication node device for the second communication node device. The RLC sublayer 303 provides segmentation and reassembly of an upper data packet, retransmission of a lost data packet, and reordering of data packets to compensate for unordered reception caused by HARQ. The MAC sublayer 302 provides multiplexing between logical and transmission channels. The MAC sublayer 302 is further responsible for allocating various radio resources (for example, resource blocks) in a cell between first communication node devices. The MAC sublayer 302 is further responsible for an HARQ operation. An RRC (Radio Resource Control) sublayer 306 in layer 3 (L3 layer) in the control plane 300 is responsible for obtaining a radio resource (i.e. a radio bearer) and configuring a lower layer by using an RRC signaling between the second communication node device and the first communication node device. A radio protocol architecture of the user plane 350 includes layer 1 (L1 layer) and layer 2 (L2 layer). A radio protocol architecture for the first communication node device and the second communication node device in the user plane 350 is substantially the same as corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355. However, the PDCP sublayer 354 further provides header compression for an upper data packet to reduce radio transmission overheads. The L2 layer 355 in the user plane 350 further includes an SDAP (Service Data Adaptation Protocol) sublayer 356. The SDAP sublayer 356 is responsible for mapping between a QoS stream and a data radio bearer (DRB, Data Radio Bearer), to support diversity of services. Although not shown in the figure, the first communication node device may have several upper layers above the L2 layer 355, including a network layer (for example, an IP layer) terminated at a P-GW on a network side and an application layer terminated at another end (for example, a remote UE or a server) of a connection.

As an embodiment, the radio protocol architecture in FIG. 3 is applicable to the first node in the present application.

As an embodiment, the radio protocol architecture in FIG. 3 is applicable to the second node in the present application.

As an embodiment, the PDCP 304 of the second communication node device is used for generating the schedule of the first communication node device.

As an embodiment, the PDCP 354 of the second communication node device is used for generating the schedule of the first communication node device.

As an embodiment, the first information block is generated at the MAC 302 or the MAC 352.

As an embodiment, the first information block is generated at the RRC 306.

As an embodiment, the first timer is generated at the MAC 302 or the MAC 352.

As an embodiment, the first timer is generated at the RRC 306.

As an embodiment, the first timer runs at the MAC 302 or the MAC 352.

As an embodiment, the first timer runs at the RRC 306.

As an embodiment, the target signal is generated at the PHY 301 or the PHY 351.

As an embodiment, the target signal is generated at the MAC 302 or the MAC 352.

As an embodiment, the target signal is generated at the RRC 306.

As an embodiment, the first signal is generated at the PHY 301 or the PHY 351.

As an embodiment, the first signal is generated at the MAC 302 or the MAC 352.

As an embodiment, the first signal is generated at the RRC 306.

As an embodiment, the second signal is generated at the PHY 301 or the PHY 351.

As an embodiment, the second signal is generated at the MAC 302 or the MAC 352.

As an embodiment, the second signal is generated at the RRC 306.

As an embodiment, the first node is a terminal.

As an embodiment, the first node is a relay.

As an embodiment, the second node is a terminal.

As an embodiment, the second node is a relay.

As an embodiment, the second node is a base station.

As an embodiment, the second node is a gNB.

As an embodiment, the second node is a TRP (Transmitter Receiver Point).

As an embodiment, the second node is used for managing a plurality of TRPs.

As an embodiment, the second node is a node for managing a plurality of cells.

As an embodiment, the second node is a node for managing a plurality of serving cells.

### Embodiment 4

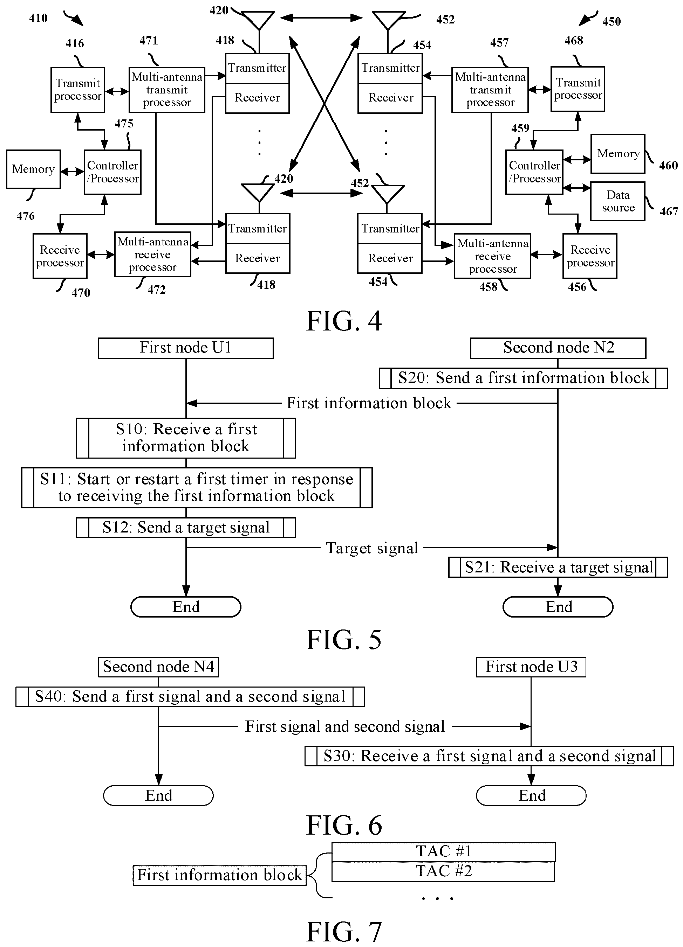

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

The second communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

During transmission from the second communication device 410 to the first communication device 450, at the second communication device 410, an upper data packet from a core network is provided to the controller/processor 475. The controller/processor 475 implements the functionality of an L2 layer. During transmission from the second communication device 410 to the first communication device 450, the controller/processor 475 provides header compression, encryption, packet segmentation and reordering, multiplexing between logical and transport channels, and radio resource allocation to the first communication device 450 based on various priority measures. The controller/processor 475 is further responsible for retransmission of a lost packet and signaling to the first communication device 450. The transmit processor 416 and the multi-antenna transmit processor 471 implement various signal processing functions for an L1 layer (i.e. a physical layer). The transmit processor 416 implements coding and interleaving to promote forward error correction (FEC) at the second communication device 410, and mapping of a signal cluster based on various modulation schemes (for example, binary phase shift keying (BPSK), quadrature phase shift keying (QPSK), M phase shift keying (M-PSK), and M quadrature amplitude modulation (M-QAM). The multi-antenna transmit processor 471 performs digital space precoding on coded and modulated symbols, including codebook-based precoding and non-codebook-based precoding, and beamforming processing, to generate one or more space streams. Then, the transmit processor 416 maps each space stream to a subcarrier, and multiplexes the space stream with a reference signal (for example, pilot) in a time domain and/or a frequency domain, and then uses inverse fast Fourier transform (IFFT) to generate a physical channel carrying a time domain multi-carrier symbol stream. Subsequently, the multi-antenna transmit processor 471 sends an analog precoding/beamforming operation on the time domain multi-carrier symbol stream. Each transmitter 418 converts a baseband multi-carrier symbol stream provided by the multi-antenna transmit processor 471 into a radio frequency stream, and then provides the radio frequency stream to different antennas 420.

During transmission from the second communication device 410 to the first communication device 450, each receiver 454 receives, at the first communication device 450, a signal by using the corresponding antenna 452. Each receiver 454 recovers information modulated onto a radio frequency carrier, converts the radio frequency stream into the baseband multi-carrier symbol stream, and provides the baseband multi-carrier symbol stream to the receive processor 456. The receive processor 456 and the multi-antenna receive processor 458 implement various signal processing functions of the L1 layer. The multi-antenna receive processor 458 receives an analog precoding/beamforming operation on the baseband multi-carrier symbol stream from the receiver 454. The receive processor 456 converts, by using fast Fourier transform (FFT), the baseband multi-carrier symbol stream on which the analog precoding/beamforming operation is received from a time domain to a frequency domain. In the frequency domain, a physical layer data signal and a reference signal are demultiplexed by the receive processor 456, where the reference signal is used for channel estimation, and after multi-antenna detection is performed on the data signal in the multi-antenna receive processor 458, any space stream that uses the first communication device 450 as a destination is recovered. A symbol in each space stream is demodulated and recovered in the receive processor 456, and a soft decision is generated. Subsequently, the receive processor 456 decodes and deinterleaves the soft decision to recover upper data and a control signal transmitted by the second communication device 410 on the physical channel. Subsequently, the upper data and the control signal are provided to the controller/processor 459. The controller/processor 459 implements a function of the L2 layer. The controller/processor 459 may be associated with the memory 460 that stores a program code and data. The memory 460 may be referred to as a computer-readable medium. During transmission from the second communication device 410 to the second communication device 450, the controller/processor 459 provides demultiplexing, packet reassembly, decryption, header decompression, and control signal processing between the transport and logical channels to recover the upper data packet from the core network. Subsequently, the upper data packet is provided to all protocol layers above the L2 layer. Various control signals may be provided to L3 for processing by L3.

During transmission from the first communication device 450 to the second communication device 410, the data source 467 is used at the first communication device 450 to provide the upper data packet to the controller/processor 459. The data source 467 indicates all the protocol layers above the L2 layer. Similar to a sending function described for the second communication device 410 in transmission from the second communication device 410 to the first communication device 450, the controller/processor 459 implements, based on radio resource allocation, header compression and encryption, packet segmentation and reordering, and multiplexing between the logical and transport channels, and implements the L2 layer function for a user plane and a control plane. The controller/processor 459 is further responsible for retransmission of a lost packet and signaling to the second communication device 410. The transmit processor 468 performs modulation mapping and channel coding. The multi-antenna transmit processor 457 performs digital multi-antenna space precoding, including codebook-based precoding and non-codebook-based precoding, and beamforming. Subsequently, the transmit processor 468 modulates a generated space stream into a multi-carrier/single-carrier symbol stream. After performing an analog precoding/beamforming operation in the multi-antenna transmit processor 457, the multi-carrier/single-carrier symbol stream is provided to different antennas 452 by using the transmitter 454. Each transmitter 454 first converts a baseband symbol stream provided by the multi-antenna transmit processor 457 into a radio frequency symbol stream, and then provides the radio frequency symbol stream to the antenna 452.

During transmission from the first communication device 450 to the second communication device 410, a function of the second communication device 410 is similar to a receiving function of the first communication device 450 described in transmission from the second communication device 410 to the first communication device 450. Each receiver 418 receives a radio frequency signal by using the corresponding antenna 420, converts the received radio frequency signal into a baseband signal, and provides the baseband signal to the multi-antenna receive processor 472 and the receive processor 470. The receive processor 470 and the multi-antenna receive processor 472 jointly implement a function of the L1 layer. The controller/processor 475 implements the function of the L2 layer. The controller/processor 475 may be associated with the memory 476 that stores the program code and the data. The memory 476 may be referred to as a computer-readable medium. During transmission from the first communication device 450 to the second communication device 410, the controller/processor 475 provides demultiplexing, packet reassembly, decryption, header decompression, and control signal processing between the transport and logical channels to recover the upper data packet from the UE 450. The upper data packet from the controller/processor 475 may be provided to the core network.

As an embodiment, the first communication device 450 includes at least one processor and at least one memory. The at least one memory includes a computer program code. The at least one memory and the computer program code are configured to be used with the at least one processor. The first communication device 450 at least performs: first receiving a first information block, the first information block being used for determining a first timing advance value; starting or restarting a first timer in response to receiving the first information block; and then sending a target signal. Whether the first timing advance value is used for the sending timing of the target signal is related to a time domain resource occupied by the target signal. When the time domain resource occupied by the target signal belongs to a first time domain resource set, the first timing advance value is used for the sending timing of the target signal. When the time domain resource occupied by the target signal does not belong to the first time domain resource set, the first timing advance value is not used for the sending timing of the target signal.

As an embodiment, the first communication device 450 includes a memory storing a computer-readable instruction program. The computer-readable instruction program generates actions when being executed by at least one processor. The actions include: first receiving a first information block, the first information block being used for determining a first timing advance value; starting or restarting a first timer in response to receiving the first information block; and then sending a target signal. Whether the first timing advance value is used for the sending timing of the target signal is related to a time domain resource occupied by the target signal. When the time domain resource occupied by the target signal belongs to a first time domain resource set, the first timing advance value is used for the sending timing of the target signal. When the time domain resource occupied by the target signal does not belong to the first time domain resource set, the first timing advance value is not used for the sending timing of the target signal.

As an embodiment, the second communication device 410 includes at least one processor and at least one memory. The at least one memory includes a computer program code. The at least one memory and the computer program code are configured to be used with the at least one processor. The second communication device 410 at least performs: first sending a first information block, the first information block being used for determining a first timing advance value; and then receiving a target signal. A receiver of the first information block includes a first node, and the first node starts or restarts a first timer in response to receiving the first information block. Whether the first timing advance value is used by the first node for the sending timing of the target signal is related to a time domain resource occupied by the target signal. When the time domain resource occupied by the target signal belongs to a first time domain resource set, the first timing advance value is used by the first node for the sending timing of the target signal. When the time domain resource occupied by the target signal does not belong to the first time domain resource set, the first timing advance value is not used by the first node for the sending timing of the target signal.

As an embodiment, the second communication device 410 includes a memory storing a computer-readable instruction program. The computer-readable instruction program generates actions when being executed by at least one processor. The actions include: first sending a first information block, the first information block being used for determining a first timing advance value; and then receiving a target signal. A receiver of the first information block includes a first node, and the first node starts or restarts a first timer in response to receiving the first information block. Whether the first timing advance value is used by the first node for the sending timing of the target signal is related to a time domain resource occupied by the target signal. When the time domain resource occupied by the target signal belongs to a first time domain resource set, the first timing advance value is used by the first node for the sending timing of the target signal. When the time domain resource occupied by the target signal does not belong to the first time domain resource set, the first timing advance value is not used by the first node for the sending timing of the target signal.

As an embodiment, the first communication device 450 corresponds to the first node in the present application.

As an embodiment, the second communication device 410 corresponds to the second node in the present application.

As an embodiment, the first communication device 450 is a UE.

As an embodiment, the first communication device 450 is a terminal.

As an embodiment, the first communication device 450 is a relay.

As an embodiment, the first communication device 450 is a terminal supporting subband full duplex.

As an embodiment, the first communication device 450 is a terminal supporting Massive-MIMO.

As an embodiment, the second communication device 410 is a base station.

As an embodiment, the second communication device 410 is a relay.

As an embodiment, the second communication device 410 is a network device.

As an embodiment, the second communication device 410 is a serving cell.

As an embodiment, the second communication device 410 is a TRP.

As an embodiment, the second communication device 410 is a base station supporting subband full duplex.

As an embodiment, the second communication device 410 is a Massive-MIMO base station.

As an embodiment, at least the first four of the antenna 452, the receiver 454, the multi-antenna receive processor 458, the receive processor 456, and the controller/processor 459 are configured to receive a first information block. At least the first four of the antenna 420, the transmitter 418, the multi-antenna transmit processor 471, the transmit processor 416, and the controller/processor 475 are configured to send the first information block.

As an implementation, at least the first four of the antenna 452, the transmitter 454, the multi-antenna transmit processor 457, the transmit processor 468, and the controller/processor 459 are configured to start or restart a first timer. At least the first four of the antenna 420, the receiver 418, the multi-antenna receive processor 472, the receive processor 470, and the controller/processor 475 are configured to start or restart the first timer.

As an implementation, at least the first four of the antenna 452, the transmitter 454, the multi-antenna transmit processor 457, the transmit processor 468, and the controller/processor 459 are configured to send a target signal. At least the first four of the antenna 420, the receiver 418, the multi-antenna receive processor 472, the receive processor 470, and the controller/processor 475 are configured to receive the target signal.

As an embodiment, at least the first four of the antenna 452, the receiver 454, the multi-antenna receive processor 458, the receive processor 456, and the controller/processor 459 are configured to receive a first signal and a second signal. At least the first four of the antenna 420, the transmitter 418, the multi-antenna transmit processor 471, the transmit processor 416, and the controller/processor 475 are configured to send the first signal and the second signal.

### Embodiment 5

Embodiment 5 exemplarily shows a flowchart of transmission between a first node and a second node according to an embodiment, as shown in FIG. 5. In FIG. 5, a first node U1 communicates with a second node N2 by using a wireless link. It should be particularly noted that the sequence in this embodiment does not limit a signal transmission sequence and an implementation sequence in the present application. An embodiment, a sub-embodiment, and an auxiliary embodiment in Embodiment 5 can be applied to any embodiment in Embodiment 6 without conflicts. On the contrary, any embodiment, sub-embodiment, and auxiliary embodiment in Embodiment 6 can be applied to Embodiment 5 without conflicts.

For **the first node U1,** a first information block is received in step S10. A first timer is started or restarted in response to receiving the first information block in step S11. A target signal is sent in step S12.

For **the second node N2,** a first information block is sent in step S20. A target signal is received in step S21.

In Embodiment 5, whether the first timing advance value is used for the sending timing of the target signal is related to a time domain resource occupied by the target signal. When the time domain resource occupied by the target signal belongs to a first time domain resource set, the first timing advance value is used for the sending timing of the target signal. When the time domain resource occupied by the target signal does not belong to the first time domain resource set, the first timing advance value is not used for the sending timing of the target signal.

Typically, step S20 further includes:
starting or restarting the first timer in response to sending the first information block.

As an embodiment, both the first node and the second node maintain the first timer.

Typically, the first information block is used for determining a second timing advance value. When the time domain resource occupied by the target signal belongs to a second time domain resource set, the second timing advance value is used for the sending timing of the target signal.

As an embodiment, the first timer is a TAT (*timeAlignmentTimer*)*.* Reception of the first information block is only used for triggering starting or restarting of the first timer that is the TAT.

As an embodiment, the first information block is used for indicating a second index value. The second index value is used for determining the second timing advance value.

As a sub-embodiment of this embodiment, the second index value is a non-negative integer.

As an embodiment, the first information block is used for simultaneously indicating the first index value and the second index value. The first index value is used for determining the first timing advance value. The second index value is used for determining the second timing advance value.

As an embodiment, the second timing advance value is in milliseconds.

As an embodiment, the second timing advance value is equal to a positive integer multiple of 16 · 64 · *T_{C}*/2*^{µ}*, where *µ* is related to a subcarrier spacing used by the target signal.

As a sub-embodiment of this embodiment, the second index value and 16 · 64 · *T_{C}*/2*^{µ}* in the present application are jointly used for determining the second timing advance value.

As a sub-embodiment of this embodiment, the second timing advance value is equal to a product of the second index value and 16 · 64 · *T_{C}*/2*^{µ}* in the present application.

As a sub-embodiment of this embodiment, the second timing advance value is linearly related to the product of the second index value and 16 · 64 · *T_{C}*/2*^{µ}* in the present application.

As a sub-embodiment of this embodiment, *T_{C}* = 1/(Δ*fₘₐₓ* · *N_{f}*), where Δ*fₘₐₓ* = 480000, and *N_{f}* = 4096.

As an embodiment, when the second timing advance value is used for the sending timing of the target signal, the second timing advance value is used for determining an uplink sending timing of the first node in the second time domain resource set.

As an embodiment, when the second timing advance value is used for the sending timing of the target signal, the second timing advance value is used for determining a boundary of a radio frame occupied by the target signal.

As an embodiment, when the second timing advance value is used for the sending timing of the target signal, the second timing advance value is used for determining a start time of the radio frame occupied by the target signal.

As an embodiment, when the second timing advance value is used for the sending timing of the target signal, the second timing advance value is used for determining a boundary of a slot occupied by the target signal.

As an embodiment, when the second timing advance value is used for the sending timing of the target signal, the second timing advance value is used for determining a start time of the slot occupied by the target signal.

As an embodiment, when the second timing advance value is used for the sending timing of the target signal, the second timing advance value is used for determining a boundary of a first OFDM symbol occupied by the target signal.

As an embodiment, when the second timing advance value is used for the sending timing of the target signal, the second timing advance value is used for determining a start time of the first OFDM symbol occupied by the target signal.

As an embodiment, when the second timing advance value is used for the sending timing of the target signal, a start time of an uplink frame (Frame Number) i for transmitting a target radio signal is earlier than a start time of a corresponding downlink frame having a downlink frame number i by *T_{TA}.* The second timing advance value is used for determining *T_{TA}.*

As a sub-embodiment of this embodiment, the second timing advance value is equal to *T_{TA}.*

As a sub-embodiment of this embodiment, a sum of the second timing advance value and an offset value is equal to *T_{TA}.*

As an auxiliary embodiment of this sub-embodiment, the offset value is equal to *N_{TA} · T_{C}.*

As a sub-embodiment of this embodiment, the first node determines the start time of the downlink frame having the downlink frame number i by using a downlink timing.

As an embodiment, the second time domain resource set occupies a positive integer number of slots in a time domain.

As an embodiment, the second time domain resource set occupies a positive integer number (greater than 1) of OFDM symbols in the time domain.

As an embodiment, the second time domain resource set is configured by using an RRC signaling.

As an embodiment, the second time domain resource set is configured by using a MAC layer signaling.

As an embodiment, the second time domain resource set is indicated by using a MAC CE.

As an embodiment, the first information block corresponds to one MAC CE. The first information block is used for simultaneously determining the first timing advance value and the second timing advance value.

Typically, the first information block is only used for indicating a timing advance for one TAG (Timing Advance Group).

As an embodiment, the first information block corresponds to one TAG **ID** (Identity).

As an embodiment, the first information block corresponds to a serving cell.

As an embodiment, the first information block corresponds to two TxRUs (Transmission Resource Units) in a serving cell.

As an embodiment, the first information block corresponds to two TxRUs of the second node in the present application.

As an embodiment, the first timing advance value and the second timing advance value respectively correspond to two TxRUs of the second node in the present application.

Typically, the first information block includes a first timing advance command and a second timing advance command. The first timing advance command and the second timing advance command are respectively used for indicating the first timing advance value and the second timing advance value. The first timing advance command and the second timing advance command are both associated with one TAG.

As an embodiment, the first timing advance command corresponds to one Timing Advance Command.

As an embodiment, the second timing advance command corresponds to one Timing Advance Command.

As an embodiment, the first information block includes two reserved bits.

As an embodiment, the first information block includes at least one reserved bit.

As an embodiment, the first timing advance command is used for indicating the first index value. The second timing advance command is used for indicating the second index value.

As a sub-embodiment of this embodiment, the first timing advance command and the second timing advance command are associated with a same TAG ID.

As a sub-embodiment of this embodiment, the first timing advance command occupies six bits, and the second timing advance command occupies six bits.

As a sub-embodiment of this embodiment, the first timing advance command occupies 12 bits, and the second timing advance command occupies 12 bits.

As a sub-embodiment of this embodiment, the first timing advance command and the second timing advance command occupy a same number of bits.

As a sub-embodiment of this embodiment, the first timing advance command and the second timing advance command occupy different numbers of bits.

Typically, the time domain resource occupied by the first time domain resource set and the time domain resource occupied by the second time domain resource set are orthogonal in a time domain.

As an embodiment, there is no slot that belongs to both the first time domain resource set and the second time domain resource set.

As an embodiment, there is no OFDM symbol that belongs to both the first time domain resource set and the second time domain resource set.

As an embodiment, the first time domain resource set is configured periodically.

As an embodiment, the second time domain resource set is configured periodically.

As an embodiment, the first time domain resource set is configured semi-continuously.

As an embodiment, the second time domain resource set is configured semi-continuously.

### Embodiment 6

Embodiment 6 exemplarily shows a flowchart of transmission of a first signal and a second signal according to an embodiment, as shown in FIG. 6. In FIG. 6, a first node U3 communicates with a second node N4 by using a wireless link. It should be particularly noted that the sequence in this embodiment does not limit a signal transmission sequence and an implementation sequence in the present application. An embodiment, a sub-embodiment, and an auxiliary embodiment in Embodiment 6 can be applied to any embodiment in Embodiment 5 without conflicts. On the contrary, any embodiment, sub-embodiment, and auxiliary embodiment in Embodiment 5 can be applied to Embodiment 6 without conflicts.

For **the first node U3,** a first signal and a second signal are received in step S30.

For **the second node N4**, a first signal and a second signal are sent in step S40.

In Embodiment 6, the first signal and the second signal are respectively associated with the first time domain resource set and the second time domain resource set. When the time domain resource occupied by the target signal belongs to the first time domain resource set, a resource occupied by the first signal is used for determining a space sending parameter of the target signal. When the time domain resource occupied by the target signal belongs to the second time domain resource set, a resource occupied by the second signal is used for determining the space sending parameter of the target signal.

As an embodiment, the first signal includes a CSI-RS (Channel State Information Reference Signal).

As an embodiment, the first signal includes an SSB (Synchronization Signal/physical broadcast channel Block).

As an embodiment, the first signal occupies at least one CSI-RS resource.

As an embodiment, the first signal is associated with a TCI (Transmission Configuration Indication).

As an embodiment, the first signal is associated with a TCI-State.

As an embodiment, the first signal is associated with a TCI-StateID.

As an embodiment, the second signal includes a CSI-RS.

As an embodiment, the second signal includes an SSB.

As an embodiment, the second signal occupies at least one CSI-RS resource.

As an embodiment, the second signal is associated with a TCI.

As an embodiment, the second signal is associated with a TCI-State.

As an embodiment, the second signal is associated with a TCI-StateID.

As an embodiment, the foregoing expression "the first signal and the second signal are respectively associated with the first time domain resource set and the second time domain resource set" means: the first signal and a radio signal sent in the first time domain resource set are QCL (Quasi Co-located), and the second signal and a radio signal sent in the second time domain resource set are QCL.

As an embodiment, the foregoing expression "the first signal and the second signal are respectively associated with the first time domain resource set and the second time domain resource set" means: a space receiving parameter corresponding to the first signal is used for determining a space sending parameter of a radio signal sent in the first time domain resource set, and a space receiving parameter corresponding to the second signal is used for determining a space sending parameter of a radio signal sent in the second time domain resource set.

As an embodiment, the foregoing expression "the first signal and the second signal are respectively associated with the first time domain resource set and the second time domain resource set" means: a CSI-RS resource occupied by the first signal is used for determining a QCL relationship of a radio signal sent in the first time domain resource set, and a CSI-RS resource occupied by the second signal is used for determining a QCL relationship of a radio signal sent in the second time domain resource set.

As an embodiment, the foregoing expression "the first signal and the second signal are respectively associated with the first time domain resource set and the second time domain resource set" means: the first signal is used for determining a space sending parameter of a radio signal sent in the first time domain resource set, and the second signal is used for determining a space sending parameter of a radio signal sent in the second time domain resource set.

As an embodiment, the foregoing expression "the first signal and the second signal are respectively associated with the first time domain resource set and the second time domain resource set" means: the first signal is used for indicating a QCL relationship of a radio signal sent in the first time domain resource set, and the second signal is used for indicating a QCL relationship of a radio signal sent in the second time domain resource set.

As an embodiment, the first signal and the second signal are respectively associated with two different PCTs.

As an embodiment, the first signal and the second signal are respectively associated with two different TRPs.

As an embodiment, the first signal and the second signal are respectively associated with two different panels.

As an embodiment, the first signal and the second signal are respectively associated with two different TxRUs.

Typically, the first signal is used for determining a first receiving timing, and the second signal is used for determining a second receiving timing. When the time domain resource occupied by the target signal belongs to the first time domain resource set, the first receiving timing and the first timing advance value are jointly used for determining the sending timing of the target signal. When the time domain resource occupied by the target signal belongs to the second time domain resource set, the second receiving timing and the second timing advance value are jointly used for determining the sending timing of the target signal.

As an embodiment, the first receiving timing is a downlink timing for the first signal.

As an embodiment, the second receiving timing is a downlink timing for the second signal.

As an embodiment, when the time domain resource occupied by the target signal belongs to the first time domain resource set, the first receiving timing is advanced by the first timing advance value to obtain the sending timing of the target signal.

As an embodiment, when the time domain resource occupied by the target signal belongs to the second time domain resource set, the second receiving timing is advanced by the second timing advance value to obtain the sending timing of the target signal.

Typically, the first signal and the second signal are associated with a same TCI codepoint.

As an embodiment, the first signal and the second signal are associated with a value corresponding to TCI information included in a DCI.

As an embodiment, the TCI-StateID corresponding to the first signal and the TCI-StateID corresponding to the second signal are simultaneously triggered by a value corresponding to TCI information included in a DCI.

As an embodiment, the TCI-StateID corresponding to the first signal and the TCI-StateID corresponding to the second signal are simultaneously activated by a value corresponding to TCI information included in a DCI.

As an embodiment, the TCI-StateID corresponding to the first signal and the TCI-StateID corresponding to the second signal are simultaneously indicated by a value corresponding to TCI information included in a DCI.

As an embodiment, the TCI codepoint corresponds to a candidate value indicated by TCI information included in a DCI.

As a sub-embodiment of this embodiment, the candidate value is a non-negative integer.

As an embodiment, the TCI codepoint corresponds to a value indicated by TCI information included in a DCI.

As a sub-embodiment of this embodiment, the value indicated by the TCI information included in the DCI is a non-negative integer.

As an embodiment, the TCI information included in the DCI in the present application corresponds to a TCI field (Field) included in the DCI.

As an embodiment, step S30 is previous to step S10 in Embodiment 5.

As an embodiment, step S40 is previous to step S20 in Embodiment 5.

As an embodiment, step S30 is followed by step S10 and previous to step S12 in Embodiment 5.

As an embodiment, step S40 is followed by step S20 and previous to step S21 in Embodiment 5.

### Embodiment 7

Embodiment 7 exemplarily shows a schematic diagram of a first information block according to an embodiment of the present application, as shown in FIG. 7. In FIG. 7, the first information block corresponds to one MAC CE. The first information block includes TAC #1 and TAC #2. TAC #1 is used for determining the first timing advance value. TAC #2 is used for determining the second timing advance value.

As an embodiment, the first information block includes one TAG ID. TAC #1 and TAC #2 are simultaneously associated with the TAG ID included in the first information block.

As an embodiment, the first information block includes two TAG IDs. TAC #1 and TAC #2 are respectively associated with the two TAG IDs included in the first information block.

As a sub-embodiment of this embodiment, the two TAG IDs included in the first information block are different.

As an embodiment, the first information block further includes a reserved bit (Reserved Bit(s)).

As an embodiment, a number of bits occupied by the first information block is fixed.

As an embodiment, TAC #1 corresponds to the first timing advance command in the present application.

As an embodiment, TAC #2 corresponds to the second timing advance command in the present application.

### Embodiment 8

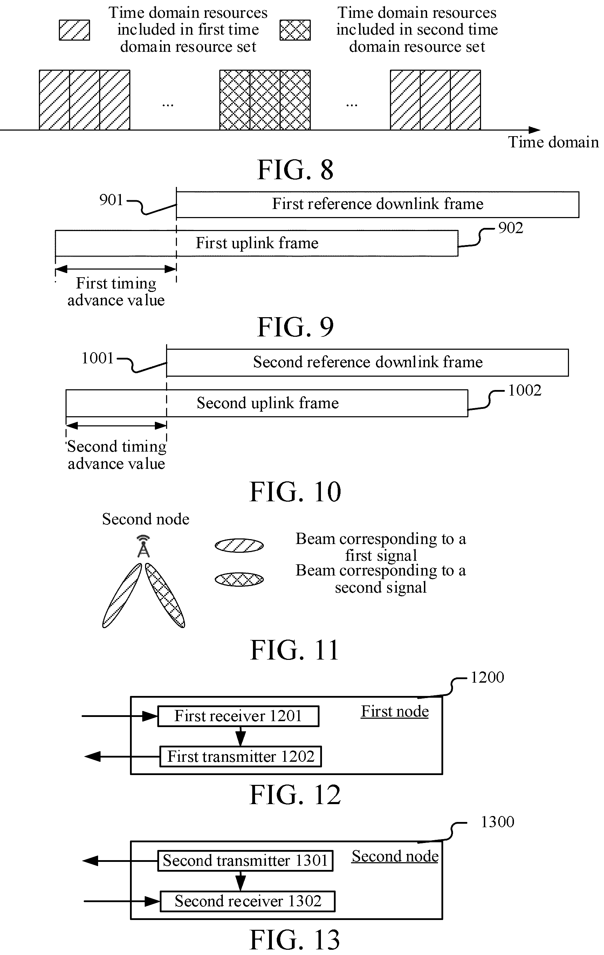

Embodiment 8 exemplarily shows a schematic diagram of a first time domain resource set and a second time domain resource set according to an embodiment of the present application, as shown in FIG. 8. In FIG. 8, the first time domain resource set and the second time domain resource set are orthogonal in a time domain.

As an embodiment, the first time domain resource set occupies a positive integer number (greater than 1) of slots.

As an embodiment, the second time domain resource set occupies a positive integer number (greater than 1) of slots.

As an embodiment, the first time domain resource set occupies a positive integer number (greater than 1) of multi-carrier symbols.

As an embodiment, the second time domain resource set occupies a positive integer number (greater than 1) of multi-carrier symbols.

### Embodiment 9

Embodiment 9 exemplarily shows a schematic diagram of a first timing advance value according to an embodiment of the present application, as shown in FIG. 9. In FIG. 9, a box 901 represents a first reference downlink frame, and a box 902 represents a first uplink frame. The first uplink frame is advanced by the first timing advance value in a time domain relative to the first reference downlink frame.

As an embodiment, the timing of the first reference downlink frame is a downlink timing of the first node for the second node.

As an embodiment, the timing of the first reference downlink frame is a receiving timing of the first node for the second node.

As an embodiment, the first node determines timing of the first reference downlink frame according to the received first signal.

### Embodiment 10

Embodiment 10 exemplarily shows a schematic diagram of a second timing advance value according to an embodiment of the present application, as shown in FIG. 10. In FIG. 10, a box 1001 represents a second reference downlink frame, and a box 1002 represents a second uplink frame. The second uplink frame is advanced by the second timing advance value in a time domain relative to the second reference downlink frame.

As an embodiment, the timing of the second reference downlink frame is a downlink timing of the first node for the second node.

As an embodiment, the timing of the second reference downlink frame is a receiving timing of the first node for the second node.

As an embodiment, the first node determines timing of the first reference downlink frame according to the received first signal.

As an embodiment, the second reference downlink frame is the same as the first reference downlink frame in Embodiment 9.

As an embodiment, the second reference downlink frame corresponds to the same downlink timing as the first reference downlink frame in Embodiment 9.

### Embodiment 11

Embodiment 11 exemplarily shows a schematic diagram of a first signal and a second signal according to an embodiment of the present application, as shown in FIG. 10. In FIG. 11, the first signal and the second signal respectively correspond to two different beams.

As an embodiment, the first signal and the second signal respectively correspond to two different QCL relationships.

As an embodiment, the first signal and the second signal respectively correspond to two receive beamforming vectors.

As an embodiment, the first signal and the second signal respectively correspond to two transmit beamforming vectors.

As an embodiment, the first signal and the second signal respectively correspond to two space receiving parameter sets.

As an embodiment, the first signal and the second signal respectively correspond to two space sending parameters.

As an embodiment, the first signal and the second signal respectively correspond to two different TCI-States.

As an embodiment, the first signal and the second signal respectively correspond to two different CSI-RS resources.

As an embodiment, the first signal and the second signal respectively correspond to two different SSBs.

As an embodiment, the first signal and the second signal are respectively sent on two TRPs.

As an embodiment, the first signal and the second signal are respectively sent on two TxRUs.

### Embodiment 12

Embodiment 12 exemplarily shows a structural block diagram of a first node, as shown in FIG. 12. In FIG. 12, a first node 1200 includes a first receiver 1201 and a second transmitter 1202.

The first receiver 1201 is configured to receive a first information block, and start or restart a first timer in response to receiving the first information block. The first information block is used for determining a first timing advance value.

The first transmitter 1202 is configured to send a target signal.

In Embodiment 12, whether the first timing advance value is used for the sending timing of the target signal is related to a time domain resource occupied by the target signal. When the time domain resource occupied by the target signal belongs to a first time domain resource set, the first timing advance value is used for the sending timing of the target signal. When the time domain resource occupied by the target signal does not belong to the first time domain resource set, the first timing advance value is not used for the sending timing of the target signal.

As an embodiment, the first information block is used for determining a second timing advance value. When the time domain resource occupied by the target signal belongs to a second time domain resource set, the second timing advance value is used for the sending timing of the target signal.

As an embodiment, the first information block is only used for indicating a timing advance for one TAG (Timing Advance Group).

As an embodiment, the first information block includes a first timing advance command and a second timing advance command. The first timing advance command and the second timing advance command are respectively used for indicating the first timing advance value and the second timing advance value. The first timing advance command and the second timing advance command are both associated with one TAG.

As an embodiment, the time domain resource occupied by the first time domain resource set and the time domain resource occupied by the second time domain resource set are orthogonal in a time domain.

As an embodiment, the first node includes:
the first receiver 1201, configured to receive a first signal and a second signal.

The first signal and the second signal are respectively associated with the first time domain resource set and the second time domain resource set. When the time domain resource occupied by the target signal belongs to the first time domain resource set, a resource occupied by the first signal is used for determining a space sending parameter of the target signal. When the time domain resource occupied by the target signal belongs to the second time domain resource set, a resource occupied by the second signal is used for determining the space sending parameter of the target signal.

As an embodiment, the first signal is used for determining a first receiving timing, and the second signal is used for determining a second receiving timing. When the time domain resource occupied by the target signal belongs to the first time domain resource set, the first receiving timing and the first timing advance value are jointly used for determining the sending timing of the target signal. When the time domain resource occupied by the target signal belongs to the second time domain resource set, the second receiving timing and the second timing advance value are jointly used for determining the sending timing of the target signal.

As an embodiment, the first signal and the second signal are associated with a same TCI codepoint (Codepoint).

As an embodiment, the first receiver 1201 includes at least the first four of the antenna 452, the receiver 454, the multi-antenna receive processor 458, the receive processor 456, and the controller/processor 459 in Embodiment 4.

As an embodiment, the first transmitter 1202 includes at least the first four of the antenna 452, the transmitter 454, the multi-antenna transmit processor 457, the transmit processor 468, and the controller/processor 459 in Embodiment 4.

### Embodiment 13

Embodiment 13 exemplarily shows a structural block diagram of a second node, as shown in FIG. 13. In FIG. 13, a second node 1300 includes a second transmitter 1301 and a second receiver 1302.

The second transmitter 1301 is configured to send a first information block. The first information block is used for determining a first timing advance value.

The second receiver 1302 is configured to receive a target signal.

In Embodiment 13, a receiver of the first information block includes a first node, and the first node starts or restarts a first timer in response to receiving the first information block. Whether the first timing advance value is used by the first node for the sending timing of the target signal is related to a time domain resource occupied by the target signal. When the time domain resource occupied by the target signal belongs to a first time domain resource set, the first timing advance value is used by the first node for the sending timing of the target signal. When the time domain resource occupied by the target signal does not belong to the first time domain resource set, the first timing advance value is not used by the first node for the sending timing of the target signal.

As an embodiment, the second transmitter 1301 further starts or restarts the first timer in response to sending the first information block.

As an embodiment, the first information block is used for determining a second timing advance value. When the time domain resource occupied by the target signal belongs to a second time domain resource set, the second timing advance value is used for the sending timing of the target signal.

As an embodiment, the first information block is only used for indicating a timing advance for one TAG.

As an embodiment, the first information block includes a first timing advance command and a second timing advance command. The first timing advance command and the second timing advance command are respectively used for indicating the first timing advance value and the second timing advance value. The first timing advance command and the second timing advance command are both associated with one TAG.

As an embodiment, the time domain resource occupied by the first time domain resource set and the time domain resource occupied by the second time domain resource set are orthogonal in a time domain.

As an embodiment, the first node includes:
the second transmitter 1301, configured to send a first signal and a second signal.

The first signal and the second signal are respectively associated with the first time domain resource set and the second time domain resource set. When the time domain resource occupied by the target signal belongs to the first time domain resource set, a resource occupied by the first signal is used for determining a space sending parameter of the target signal. When the time domain resource occupied by the target signal belongs to the second time domain resource set, a resource occupied by the second signal is used for determining the space sending parameter of the target signal.

As an embodiment, the first signal is used for determining a first receiving timing, and the second signal is used for determining a second receiving timing. When the time domain resource occupied by the target signal belongs to the first time domain resource set, the first receiving timing and the first timing advance value are jointly used for determining the sending timing of the target signal. When the time domain resource occupied by the target signal belongs to the second time domain resource set, the second receiving timing and the second timing advance value are jointly used for determining the sending timing of the target signal.

As an embodiment, the first signal and the second signal are associated with a same **TCI** codepoint.

As an embodiment, the second transmitter 1301 includes at least the first six of the antenna 420, the transmitter 418, the multi-antenna transmit processor 471, the transmit processor 416, and the controller/processor 475 in Embodiment 4.

As an embodiment, the second receiver 1302 includes at least the first four of the antenna 420, the receiver 418, the multi-antenna receive processor 472, the receive processor 470, and the controller/processor 475 in Embodiment 4.

A person of ordinary skill in the art may understand that all or some of the steps of the foregoing method may be implemented by a program instructing relevant hardware. The program may be stored in a computer-readable storage medium, such as a read-only memory, a hard disk, or an optical disc. Optionally, all or some of the steps of the foregoing embodiments may alternatively be implemented by using one or more integrated circuits. Correspondingly, the modules and units in the foregoing embodiments may be implemented in a form of hardware, or may be implemented in a form of a software functional module. The present application is not limited to a combination of software and hardware in any particular form. The first node in the present application includes, but is not limited to, a wireless communication device such as a mobile phone, a tablet, a laptop, a network adapter, a low-power device, an eMTC device, an NB-IoT device, an in-vehicle communication device, transportation means, a vehicle, an RSU, an aircraft, an airplane, an unmanned aerial vehicle, or a remote control airplane. The second node in the present application includes, but is not limited to, a wireless communication device such as a macrocellular base station, a microcellular base station, a small cellular base station, a home base station, a relay base station, an eNB, a gNB, a transmitter receiver point TRP, a GNSS, a relay satellite, a satellite base station, an aerial base station, an RSU, an unmanned aerial vehicle, a test device, for example, a transceiver apparatus or a signaling tester simulating some functions of a base station.

A person skilled in the art should understand that the present disclosure may be implemented in other specified forms without departing from the core or basic characteristics thereof. Therefore, the currently disclosed embodiments should be considered as descriptive rather than restrictive in any way. The scope of the present disclosure is determined by the appended claims rather than the foregoing description, and all modifications within the equivalent meanings and regions thereof are considered to be included therein.

## Claims

1. A first node for use in wireless communication, comprising:
a first receiver, configured to receive a first information block, and start or restart a first timer in response to receiving the first information block, the first information block being used for determining a first timing advance value; and
a first transmitter, configured to send a target signal,
wherein whether the first timing advance value is used for the sending timing of the target signal is related to a time domain resource occupied by the target signal; when the time domain resource occupied by the target signal belongs to a first time domain resource set, the first timing advance value is used for the sending timing of the target signal; and when the time domain resource occupied by the target signal does not belong to the first time domain resource set, the first timing advance value is not used for the sending timing of the target signal.

2. The first node according to claim 1, wherein the first information block is used for determining a second timing advance value; and when the time domain resource occupied by the target signal belongs to a second time domain resource set, the second timing advance value is used for the sending timing of the target signal.

3. The first node according to claim 1 or 2, wherein the first information block is only used for indicating a timing advance for one TAG (Timing Advance Group).

4. The first node according to claim 2 or 3, wherein the first information block comprises a first timing advance command and a second timing advance command; the first timing advance command and the second timing advance command are respectively used for indicating the first timing advance value and the second timing advance value; and the first timing advance command and the second timing advance command are both associated with one TAG.

5. The first node according to any one of claims 2 to 4, wherein the time domain resource occupied by the first time domain resource set and the time domain resource occupied by the second time domain resource set are orthogonal in a time domain.

6. The first node according to any one of claims 2 to 5, comprising:
the first receiver, configured to receive a first signal and a second signal,
wherein the first signal and the second signal are respectively associated with the first time domain resource set and the second time domain resource set; when the time domain resource occupied by the target signal belongs to the first time domain resource set, a resource occupied by the first signal is used for determining a space sending parameter of the target signal; and when the time domain resource occupied by the target signal belongs to the second time domain resource set, a resource occupied by the second signal is used for determining the space sending parameter of the target signal.

7. The first node according to claim 6, wherein the first signal is used for determining a first receiving timing, and the second signal is used for determining a second receiving timing; when the time domain resource occupied by the target signal belongs to the first time domain resource set, the first receiving timing and the first timing advance value are jointly used for determining the sending timing of the target signal; and when the time domain resource occupied by the target signal belongs to the second time domain resource set, the second receiving timing and the second timing advance value are jointly used for determining the sending timing of the target signal.

8. The first node according to claim 6 or 7, wherein the first signal and the second signal are associated with a same TCI codepoint (Codepoint).

9. A second node for use in wireless communication, comprising:
a second transmitter, configured to send a first information block, the first information block being used for determining a first timing advance value; and
a second receiver, configured to receive a target signal,
wherein a receiver of the first information block comprises a first node, and the first node starts or restarts a first timer in response to receiving the first information block; whether the first timing advance value is used by the first node for the sending timing of the target signal is related to a time domain resource occupied by the target signal; when the time domain resource occupied by the target signal belongs to a first time domain resource set, the first timing advance value is used by the first node for the sending timing of the target signal; and when the time domain resource occupied by the target signal does not belong to the first time domain resource set, the first timing advance value is not used by the first node for the sending timing of the target signal.

10. The second node according to claim 9, wherein the first information block is used for determining a second timing advance value; and when the time domain resource occupied by the target signal belongs to a second time domain resource set, the second timing advance value is used for the sending timing of the target signal.

11. The second node according to claim 9 or 10, wherein the first information block is only used for indicating a timing advance for one TAG.

12. The second node according to claim 10 or 11, wherein the first information block comprises a first timing advance command and a second timing advance command; the first timing advance command and the second timing advance command are respectively used for indicating the first timing advance value and the second timing advance value; and the first timing advance command and the second timing advance command are both associated with one TAG.

13. The second node according to any one of claims 10 to 12, wherein the time domain resource occupied by the first time domain resource set and the time domain resource occupied by the second time domain resource set are orthogonal in a time domain.

14. The second node according to any one of claims 10 to 13, comprising:
the second transmitter, configured to send a first signal and a second signal,
wherein the first signal and the second signal are respectively associated with the first time domain resource set and the second time domain resource set; when the time domain resource occupied by the target signal belongs to the first time domain resource set, a resource occupied by the first signal is used for determining a space sending parameter of the target signal; and when the time domain resource occupied by the target signal belongs to the second time domain resource set, a resource occupied by the second signal is used for determining the space sending parameter of the target signal.

15. The second node according to claim 14, wherein the first signal is used for determining a first receiving timing, and the second signal is used for determining a second receiving timing; when the time domain resource occupied by the target signal belongs to the first time domain resource set, the first receiving timing and the first timing advance value are jointly used for determining the sending timing of the target signal; and when the time domain resource occupied by the target signal belongs to the second time domain resource set, the second receiving timing and the second timing advance value are jointly used for determining the sending timing of the target signal.

16. The second node according to claim 14 or 15, wherein the first signal and the second signal are associated with a same TCI codepoint.

17. A method in a first node for use in wireless communication, comprising:
receiving a first information block, and starting or restarting a first timer in response to receiving the first information block, the first information block being used for determining a first timing advance value; and
sending a target signal,
wherein whether the first timing advance value is used for the sending timing of the target signal is related to a time domain resource occupied by the target signal; when the time domain resource occupied by the target signal belongs to a first time domain resource set, the first timing advance value is used for the sending timing of the target signal; and when the time domain resource occupied by the target signal does not belong to the first time domain resource set, the first timing advance value is not used for the sending timing of the target signal.

18. The method in the first node according to claim 17, wherein the first information block is used for determining a second timing advance value; and when the time domain resource occupied by the target signal belongs to a second time domain resource set, the second timing advance value is used for the sending timing of the target signal.

19. The method in the first node according to claim 17 or 18, wherein the first information block is only used for indicating a timing advance for one TAG (Timing Advance Group).

20. The method in the first node according to claim 18 or 19, wherein the first information block comprises a first timing advance command and a second timing advance command; the first timing advance command and the second timing advance command are respectively used for indicating the first timing advance value and the second timing advance value; and the first timing advance command and the second timing advance command are both associated with one TAG.

21. The method in the first node according to any one of claims 18 to 20, wherein the time domain resource occupied by the first time domain resource set and the time domain resource occupied by the second time domain resource set are orthogonal in a time domain.

22. The method in the first node according to any one of claims 18 to 21, comprising:
receiving a first signal and a second signal,
wherein the first signal and the second signal are respectively associated with the first time domain resource set and the second time domain resource set; when the time domain resource occupied by the target signal belongs to the first time domain resource set, a resource occupied by the first signal is used for determining a space sending parameter of the target signal; and when the time domain resource occupied by the target signal belongs to the second time domain resource set, a resource occupied by the second signal is used for determining the space sending parameter of the target signal.

23. The method in the first node according to claim 22, wherein the first signal is used for determining a first receiving timing, and the second signal is used for determining a second receiving timing; when the time domain resource occupied by the target signal belongs to the first time domain resource set, the first receiving timing and the first timing advance value are jointly used for determining the sending timing of the target signal; and when the time domain resource occupied by the target signal belongs to the second time domain resource set, the second receiving timing and the second timing advance value are jointly used for determining the sending timing of the target signal.

24. The method in the first node according to claim 22 or 23, wherein the first signal and the second signal are associated with a same TCI codepoint (Codepoint).

25. A method in a second node for use in wireless communication, comprising:
sending a first information block, the first information block being used for determining a first timing advance value; and
receiving a target signal,
wherein a receiver of the first information block comprises a first node, and the first node starts or restarts a first timer in response to receiving the first information block; whether the first timing advance value is used by the first node for the sending timing of the target signal is related to a time domain resource occupied by the target signal; when the time domain resource occupied by the target signal belongs to a first time domain resource set, the first timing advance value is used by the first node for the sending timing of the target signal; and when the time domain resource occupied by the target signal does not belong to the first time domain resource set, the first timing advance value is not used by the first node for the sending timing of the target signal.

26. The method in the second node according to claim 25, wherein the first information block is used for determining a second timing advance value; and when the time domain resource occupied by the target signal belongs to a second time domain resource set, the second timing advance value is used for the sending timing of the target signal.

27. The method in the second node according to claim 25 or 26, wherein the first information block is only used for indicating a timing advance for one TAG.

28. The method in the second node according to claim 26 or 27, wherein the first information block comprises a first timing advance command and a second timing advance command; the first timing advance command and the second timing advance command are respectively used for indicating the first timing advance value and the second timing advance value; and the first timing advance command and the second timing advance command are both associated with one TAG.

29. The method in the second node according to any one of claims 26 to 28, wherein the time domain resource occupied by the first time domain resource set and the time domain resource occupied by the second time domain resource set are orthogonal in a time domain.

30. The method in the second node according to any one of claims 26 to 29, comprising:
sending a first signal and a second signal,
wherein the first signal and the second signal are respectively associated with the first time domain resource set and the second time domain resource set; when the time domain resource occupied by the target signal belongs to the first time domain resource set, a resource occupied by the first signal is used for determining a space sending parameter of the target signal; and when the time domain resource occupied by the target signal belongs to the second time domain resource set, a resource occupied by the second signal is used for determining the space sending parameter of the target signal.

31. The method in the second node according to claim 30, wherein the first signal is used for determining a first receiving timing, and the second signal is used for determining a second receiving timing; when the time domain resource occupied by the target signal belongs to the first time domain resource set, the first receiving timing and the first timing advance value are jointly used for determining the sending timing of the target signal; and when the time domain resource occupied by the target signal belongs to the second time domain resource set, the second receiving timing and the second timing advance value are jointly used for determining the sending timing of the target signal.

32. The method in the second node according to claim 30 or 31, wherein the first signal and the second signal are associated with a same TCI codepoint.
